# FASCICULE DE BREVET EUROPEEN

(11) **EP 0 706 915 B1**
(45) Date de publication et mention de la délivrance du brevet: **11.02.1998**
(21) Numéro de dépôt: 95402242.2
(22) Date de dépôt: 06.10.1995
(51) Int. Cl.: B60R 16/02

(54) **Dispositif de montage d'un faisceau de conducteurs électriques**
Montage-Einrichtung für ein Bündel elektrischer Leiter
Mounting device for wire harness

(30) Priorité: 11.10.1994 FR 9412125
(43) Date de publication de la demande: 17.04.1996
(73) Titulaire: AUTOMOBILES PEUGEOT, 75116 Paris (FR); AUTOMOBILES CITROEN, 92200 Neuilly-sur-Seine (FR)
(72) Inventeur: Pernel, Sylvain, F-25200 Montbeliard (FR)
(74) Mandataire: Polus, Camille

(56) Documents cités:
- EP-A- 0 603 741
- DE-C- 3 500 359
- DE-C- 3 916 468
- FR-A- 2 335 972

## Description

La présente invention concerne un dispositif de montage d'un faisceau de conducteurs électriques destiné à être introduit dans des orifices ménagés dans des éléments de paroi d'un véhicule automobile, ainsi qu'un assemblage obtenu au moyen d'un tel dispositif de montage.

Actuellement, il existe dans l'industrie automobile de nombreuses techniques adaptées pour réaliser le montage et la fixation d'un faisceau de conducteurs électriques.

Ces techniques peuvent par exemple permettre d'assurer la fixation de conducteurs électriques du réseau électrique principal d'un véhicule automobile à des éléments de paroi de la caisse du véhicule, en vue de leur raccordement à un réseau électrique secondaire.

Dans ce cas, le faisceau de conducteurs traverse généralement des orifices ménagés chacun dans les éléments de paroi de la caisse, tels que des plaques de tôles intérieure et extérieure.

Les dispositifs de fixation de faisceaux de conducteurs électriques doivent être aisément mis en oeuvre sur le véhicule et doivent présenter une très bonne étanchéité à l'eau ainsi qu'une très bonne isolation acoustique.

Différentes techniques de fixation ont été mises au point pour tenter d'atteindre ces buts.

Une première technique consiste à insérer le faisceau de conducteurs dans un manchon cylindrique en matériau élastique. Ce manchon comporte une partie longitudinale munie à une de ses extrémités d'un organe de fixation sur un des éléments de paroi et à son autre extrémité d'un organe d'étanchéité constitué par une collerette élastique coopérant avec l'autre élément de paroi.

Cette technique de fixation présente de nombreux inconvénients notamment en ce qui concerne sa difficulté de mise en oeuvre et la qualité de l'étanchéité obtenue.

En effet, l'opération consistant à insérer le faisceau de câbles à l'intérieur du manchon est une opération délicate à mettre en oeuvre.

De plus, le raccordement entre les faisceaux de conducteurs du réseau électrique principal et du réseau électrique secondaire du véhicule est généralement effectué au moyen de connecteurs multibroches complémentaires fixés à chacune des extrémités des conducteurs à relier.

Du fait de son encombrement, le connecteur doit être fixé aux conducteurs postérieurement à l'insertion du faisceau dans le manchon, ce qui a pour conséquence de nuire à l'étanchéité de l'assemblage.

Par ailleurs, la longueur du manchon doit être définie de façon très précise pour que la collerette appuye efficacement sur l'élément de paroi.

On a tenté de palier ces inconvénients en proposant un dispositif de fixation muni d'éléments assurant chacun et de façon séparée les fonctions de fixation et d'étanchéité.

Cependant, les dispositifs de ce type présentent également une mauvaise étanchéité à l'eau et nécessitent une opération de montage délicate à réaliser.

L'invention vise à palier les inconvénients mentionnés.

Elle a donc pour objet un dispositif de montage d'un faisceau de conducteurs électriques muni d'un connecteur, entre des premier et second éléments de paroi d'un véhicule automobile, mutuellement espacés et comportant chacun un orifice de passage dudit faisceau, caractérisé en ce qu'il comporte un manchon en matériau rigide muni d'un organe de fixation sur le second élément de paroi et destiné à coopérer avec une zone d'extrémité dudit connecteur pour le maintenir dans l'orifice du premier élément de paroi, et un fourreau d'étanchéité en matériau élastique destiné à entourer ledit manchon et adapté pour coopérer par au moins une de ses extrémités avec un élément de paroi correspondant.

Selon une autre caractéristique de l'invention, le manchon comporte une collerette de fixation sur le second élément de paroi et un corps sensiblement cylindrique de maintien de faisceau s'étendant à partir du bord interne de la collerette et perpendiculairement à celle-ci.

Avantageusement, le manchon est constitué de deux coquilles identiques, chaque coquille étant munie de moyens de liaison amovible avec l'autre partie.

L'invention a également pour objet un assemblage d'un faisceau de conducteurs électriques muni d'un connecteur entre des premier et second éléments de paroi d'un véhicule automobile mutuellement espacés, caractérisé en ce qu'il est obtenu au moyen d'un dispositif de montage tel que défini ci-dessus.

D'autres caractéristiques et avantages ressortiront de la description suivante, donnée à titre d'exemple, en regard des dessins annexés sur lesquels:
- la figure 1 représente une vue schématique partiellement en coupe d'un faisceau de conducteurs électriques maintenu entre deux éléments de paroi d'un véhicule automobile au moyen d'un dispositif de montage de l'art antérieur;
- la figure 2 représente une vue schématique partiellement en coupe d'un faisceau de conducteurs électriques maintenu entre deux éléments de paroi d'un véhicule automobile au moyen d'un dispositif de montage selon l'invention; et
- la figure 3 représente une vue en perspective et à plus grande échelle d'un détail du dispositif de montage représenté sur la figure 2.

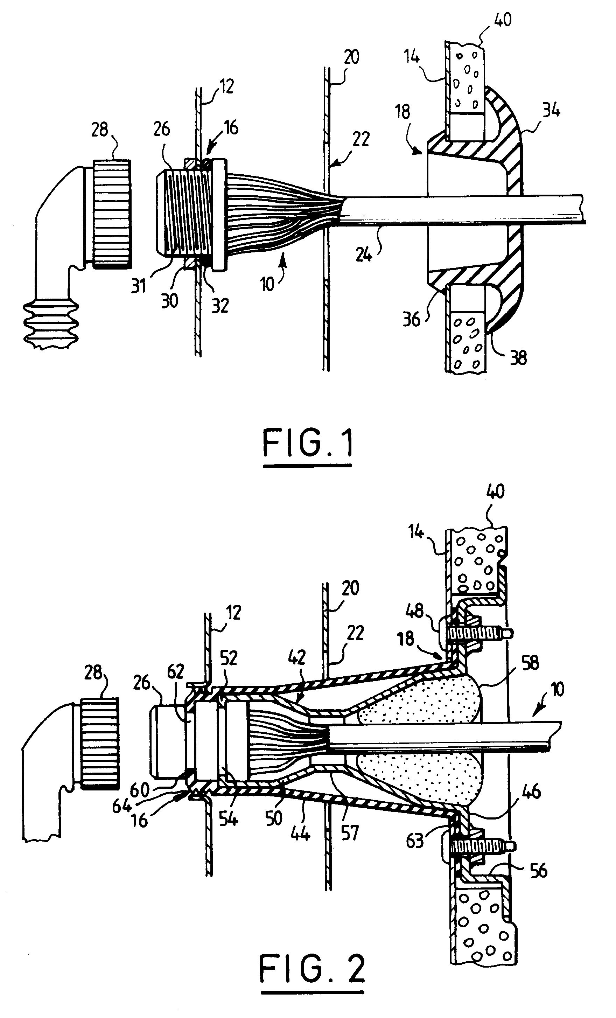

Sur la figure 1, on a représenté un faisceau de conducteurs électriques 10 fixé sur des premier 12 et second 14 éléments de paroi d'un organe de véhicule automobile mutuellement espacés, au moyen d'un dispositif de montage selon l'art antérieur. Par exemple, les éléments de paroi 12 et 14 sont constitués respectivement par une tôle intérieure, c'est à dire située en regard de l'habitacle, et une tôle extérieure de doublure d'aile de la caisse d'un véhicule automobile.

Le faisceau 10 traverse des orifices 16 et 18 ménagés chacun dans les tôles intérieure 12 et extérieure 14. Ce faisceau traverse également une tôle médiane 20 de renfort munie d'une ouverture 22.

Le faisceau est muni d'un gainage 24 et, à son extrémité libre, d'un connecteur multibroches 26 destiné à assurer une liaison électrique avec un connecteur complémentaire 28 appartenant par exemple à un réseau électrique secondaire, non représenté, du véhicule automobile, tel qu'un réseau d'alimentation de dispositifs d'une porte du véhicule.

La fixation du faisceau est réalisée par des moyens de fixation et par des moyens d'étanchéité distincts.

Les moyens de fixation sont constitués par un écrou de fixation 30 coopérant avec un filetage 31 ménagé sur la surface extérieure du connecteur multibroches 26, pour assurer le maintien de ce connecteur contre la tôle intérieure 12.

Les moyens d'étanchéité sont constitués d'une part par un joint 32 intercalé entre le connecteur 26 et la tôle 12 et, d'autre part par un élément d'étanchéité 34 muni d'un orifice traversé par le faisceau 10 et de deux lèvres d'étanchéité périphérique 36 et 38 assurant l'étanchéité au niveau de la tôle extérieure 14.

Une première lèvre d'étanchéité 36 est en appui contre une face de la tôle extérieure 14 et la seconde lèvre d'étanchéité 38 est en appui, par l'intermédiaire d'un élément d'isolation acoustique annulaire 40, contre l'autre face de la tôle extérieure 14.

Comme on l'a mentionné précédemment, ce dispositif de fixation présente de nombreux inconvénients, notamment en ce qui concerne la qualité de l'étanchéité obtenue, en particulier entre les tôles 12 et 14, et la difficulté de la mise en oeuvre, le faisceau de conducteurs 10 devant être inséré dans l'orifice de l'élément d'étanchéité 34 puis fixé au connecteur 26.

En outre, l'insertion du connecteur 26 dans l'orifice ménagé dans la tôle intérieure 12 est délicate à réaliser du fait de l'espace disponible entre les tôles 12 et 14.

Sur la figure 2, on a représenté un faisceau de câbles, identique au faisceau de la figure 1, maintenu au moyen d'un dispositif de montage selon l'invention.

Sur cette figure 2, des éléments identiques à ceux de la figure 1 portent les mêmes numéros de référence.

Comme mentionné précédemment, le dispositif de montage comporte un manchon 42 en matériau rigide et un fourreau d'étanchéité 44 en matériau élastique tel que du caoutchouc ou de l'élastomère.

Le manchon 42 est muni à une de ses extrémités d'un organe de fixation constitué par exemple d'une collerette 46 et d'un ensemble vis-écrou, tel que 48.

De préférence, un des éléments de l'ensemble vis-écrou, par exemple la vis, est soudée sur la tôle 14.

Le manchon 42 comporte en outre un corps de maintien de faisceau 50 sensiblement cylindrique s'étendant à partir du bord interne de la collerette 46 et perpendiculairement à celle-ci. L'extrémité libre du corps 50 comporte un épaulement interne 52 destiné à venir coopérer avec une rainure 54 ménagée dans une zone d'extrémité libre du faisceau de câble 10 constituée par le connecteur 26.

Avantageusement, la collerette 46 comporte un décrochement 56 définissant un volume adapté pour recevoir un élément d'isolation acoustique 40.

De plus, la partie médiane du corps 50 comporte un étranglement 57, la zone du manchon située entre la collerette 46 et l'étranglement définissant un logement de réception d'un matériau d'étanchéité durcissable 58 tel que de la mousse de polyuréthane ou analogue.

Par ailleurs, le fourreau d'étanchéité 44 destiné à entourer le manchon 42 a une forme sensiblement cylindrique. Il est muni à une de ses zones d'extrémités d'une saillie interne 60 destinée à venir coopérer avec une seconde rainure 62 ménagée dans une seconde partie du connecteur 26 située à proximité de la rainure 54. L'autre extrémité du fourreau 44 se prolonge extérieurement pour former un anneau plan 63 destiné à être plaqué contre la collerette 46 du manchon 42.

L'extrémité du fourreau d'étanchéité coopérant avec la tôle intérieure 12 est munie extérieurement de plusieurs rangées de lèvres périphériques 64 s'appuyant contre le bord interne de l'orifice 16, de préférence un bord tombé, ménagé dans la tôle intérieure 12.

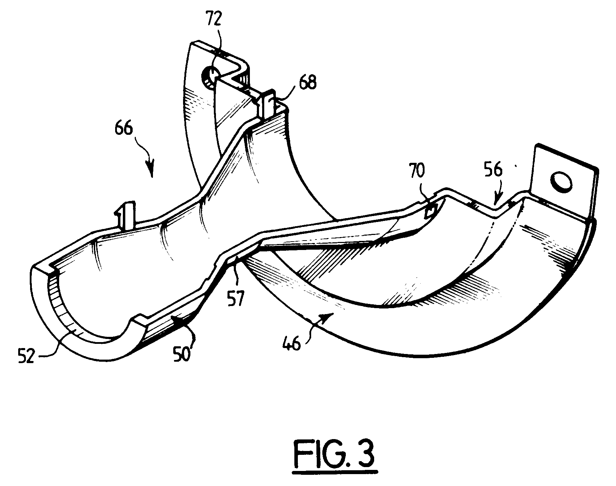

Avantageusement et tel que représenté sur la figure 3, le manchon 42 est constitué de deux coquilles identiques, une seule 66 de ces coquilles étant représentée sur cette figure.

Chaque coquille est munie de moyens complémentaires de liaison amovible avec l'autre partie, constitués par exemple d'une patte d'encliquetage, tel que 68, et d'un trou, tel que 70.

Par ailleurs, chaque coquille est munie au niveau de la collerette 46 de deux orifices, tel que 72, destinés à être placés en regard d'orifices complémentaires de l'autre coquille de façon à recevoir une des vis des moyens fixation 48.

La fixation du faisceau de câbles 10 au moyen de ce dispositif de fixation s'effectue en préparant préalablement le faisceau en reliant les extrémités de chaque conducteur au connecteur 26.

Les deux coquilles 66 du manchon 42 sont alors disposées autour de l'extrémité du faisceau et sont réunies au moyen des pattes d'encliquetages 68 qui s'engagent dans les trous correspondants 70.

On coiffe alors le manchon 42 et le connecteur 26 par le fourreau d'étanchéité 44.

Dans cette position l'épaulement interne 52 du manchon est inséré dans la rainure 54 du connecteur, la saillie interne 60 du fourreau 44 est insérée dans la seconde rainure 62, et le corps 50 entoure le faisceau 10.

Afin de parfaire l'étanchéité de l'ensemble on dispose dans le manchon 42 au niveau de son étranglement 57 de sa partie médiane le matériau d'étanchéité durcissable 58.

Le faisceau de connecteurs 10 ainsi préparé est prêt à être installé sur le véhicule automobile.

On insère alors l'ensemble constitué par le faisceau 10, le manchon 42 et le fourreau 44 dans les orifices ménagés respectivement dans les éléments de paroi 12 et 14.

Après avoir positionné l'élément d'étanchéité 40 on fixe l'ensemble constitué par le manchon 42 et le fourreau 44 au moyen des vis et des écrous.

Le connecteur du faisceau 10 est dès lors engagé dans l'orifice de la tôle intérieure 12 et est efficacement maintenu dans cette position par le manchon 42.

En outre, l'assemblage obtenu présente une très bonne étanchéité à l'eau en particulier grâce aux lèvres périphériques s'appuyant sur le bord tombé de l'élément de paroi 12 et à l'anneau plan 63 intercalé entre la tôle extérieure 14 et la base du manchon 42.

On peut alors réaliser la liaison électrique entre le faisceau et le réseau électrique de la porte du véhicule automobile en reliant les connecteurs correspondants.

Le dispositif de fixation qui a été décrit, permettant de dissocier les fonctions de maintien et d'étanchéité permet par conséquent un montage rapide et aisé sur le véhicule tout en conférant une très bonne étanchéité à l'ensemble.

En outre, le manchon étant réalisé en matériau rigide, le passage du connecteur dans l'orifice de la tôle extérieure s'effectue aisément.

Par ailleurs, l'élasticité des lèvres du fourreau d'étanchéité ainsi que la dimension des orifices ménagés dans la collerette 46 du manchon 42 permettent de rattraper les variations de configurations des tôles dues aux tolérances de fabrication.

Bien entendu, l'invention ne se limite pas au mode de réalisation qui a été décrit.

C'est ainsi que le corps du manchon peut présenter une forme générale sensiblement coudée pour s'adapter à la disposition des orifices ménagés dans les éléments paroi.

## Revendications

1. Dispositif de montage d'un faisceau (10) de conducteurs électriques muni d'un connecteur (26), entre des premier (12) et second (14) éléments de paroi d'un véhicule automobile, mutuellement espacés et comportant chacun un orifice (16, 18) de passage dudit faisceau (10), caractérisé en ce qu'il comporte un manchon (42) en matériau rigide muni d'un organe de fixation (46,48) sur le second élément de paroi (14) et destiné à coopérer avec une zone d'extrémité dudit connecteur pour le maintenir dans l'orifice du premier élément de paroi (12), et un fourreau d'étanchéité (44) en matériau élastique destiné à entourer ledit manchon (42) et adapté pour coopérer par au moins une de ses extrémités avec un élément de paroi (12) correspondant.

2. Dispositif de montage selon la revendication 1, caractérisé en ce que le manchon (42) comporte une collerette (46) de fixation sur le second élément de paroi (14) et un corps sensiblement cylindrique de maintien de faisceau (50) s'étendant à partir du bord interne de la collerette (46) et perpendiculairement à celle-ci.

3. Dispositif de montage selon l'une des revendications 1 et 2, caractérisé en ce que le manchon (42) est constitué de deux coquilles (66), chaque coquille étant munie de moyens complémentaires de liaison amovible (68,70) avec l'autre partie.

4. Dispositif de montage selon l'une quelconque des revendications 1 à 3, caractérisé en ce que les deux coquilles (66) du manchon sont identiques.

5. Dispositif de montage selon l'une quelconque des revendications 1 à 4 caractérisé en ce que le corps du manchon (42) comporte un étranglement (57), une zone du manchon située entre l'extrémité dudit manchon en regard du second élément de paroi (14) et l'étranglement (57) définissant un logement de réception d'un matériau d'étanchéité durcissable (58).

6. Dispositif de montage selon l'une quelconque des revendications 1 à 5, caractérisé en ce que la zone d'extrémité du fourreau d'étanchéité (44) coopérant avec le premier élément de paroi (12) est munie de lèvres périphériques (64) destinées à coopérer avec le bord interne de l'orifice (16) ménagé dans ledit premier élément de paroi (12).

7. Dispositif de montage selon l'une quelconque des revendications 2 à 6, caractérisé en ce que l'organe de fixation (46,48) comporte des ensembles vis-écrous.

8. Dispositif de montage selon l'une quelconque des revendications 2 à 7, caractérisé en ce qu'il comporte une couche de matériaux absorbant les vibrations (40) destinée à être intercalée entre la collerette (46) du manchon (42) et le second élément de paroi (14).

9. Assemblage d'un faisceau (10) de conducteurs électriques muni d'un connecteur (26), entre des premier (12) et second (14) éléments de paroi d'un véhicule automobile mutuellement espacés, caractérisé en ce qu'il est obtenu au moyen d'un dispositif de montage selon l'une quelconque des revendications 1 à 8.

10. Assemblage selon la revendication 9 caractérisé en ce que le bord de l'orifice (16) ménagé dans le premier élément de paroi (12) et en contact avec le fourreau d'étanchéité (44) est constitué d'un bord tombé.

## Claims

1. Device for mounting a bundle (10) of electric conductors fitted with a connector (26) between mutually spaced first (12) and second (14) wall elements of a motor vehicle, each wall element comprising an opening (16, 18) for said bundle (10) to pass through, characterised in that the device comprises a sleeve (42) of rigid material provided with means (46, 48) for attachment to the second wall element (14) and intended to co-operate with an end zone of said connector in order to secure it in the opening in the first wall element (12), and a sealing sheath (44) made of resilient material intended to surround said sleeve (42) and adapted to co-operate, by at least one of its ends, with a corresponding wall element (12).

2. Mounting device according to claim 1, characterised in that the sleeve (42) comprises a collar (46) for fixing to the second wall element (14) and a substantially cylindrical retaining body (50) for the bundle extending from the inner edge of the collar (46) and perpendicular thereto.

3. Mounting device according to one of claims 1 and 2, characterised in that the sleeve (42) consists of two shells (66), each shell being provided with complementary means (68, 70) for releasably connecting it to the other part.

4. Mounting device according to any one of claims 1 to 3, characterised in that the two shells (66) of the sleeve are identical.

5. Mounting device according to any one of claims 1 to 4, characterised in that the body of the sleeve (42) comprises a constriction (57), a zone of the sleeve located between the end of said sleeve facing the second wall element (14) and the constriction (57) defining a recess for accommodating a hardenable sealing material (58).

6. Mounting device according to any one of claims 1 to 5, characterised in that the end zone of the sealing sheath (44) co-operating with the first wall element (12) is provided with peripheral lips (64) intended to co-operate with the inner edge of the opening (16) provided in the first wall element (12).

7. Mounting device according to any one of claims 2 to 6, characterised in that the fixing member (46, 48) comprises nut-and-bolt assemblies.

8. Mounting device according to any one of claims 2 to 7, characterised in that it comprises a layer of vibration-absorbing materials (40) intended to be intercalated between the collar (46) of the sleeve (42) and the second wall element (14).

9. Assembly of a bundle (10) of electric conductors provided with a connector (26), between mutually spaced first (12) and second (14) wall elements of a motor vehicle, characterised in that it is obtained by means of a mounting device according to any one of claims 1 to 8.

10. Assembly according to claim 9, characterised in that the edge of the opening (16) provided in the first wall element (12) and in contact with the sealing sheath (44) consists of a dropped edge.

## Patentansprüche

1. Vorrichtung zur Montage eines Bündels (10) aus mit einem Stecker (26) versehenen elektrischen Leitern zwischen einem ersten (12) und einem zweiten (14) Wandelement eines Kraftfahrzeugs, die im Abstand voneinander liegen und jeweils eine Durchtrittsöffnung (16, 18) für das Bündel (10) aufweisen, dadurch gekennzeichnet, daß sie eine Muffe (42) aus steifem Material, welche mit einer Befestigungseinrichtung (46, 48) zur Befestigung am zweiten Wandelement (14) versehen und für ein Zusammenwirken mit einem Endbereich des Steckers derart, daß dieser in der Öffnung des ersten Wandelements (12) gehalten wird, bestimmt ist, und eine Dichtungsmanschette (44) aus elastischem Material, welche dazu bestimmt ist, die Muffe (42) zu umgeben, und für ein Zusammenwirken mit einem entsprechendem Wandelement (12) über wenigstens eines ihrer Enden eingerichtet ist, aufweist.

2. Montagevorrichtung nach Anspruch 1, dadurch gekennzeichnet, daß die Muffe (42) einen Befestigungskragen (46) zur Befestigung am zweiten Wandelement (14) und einem im wesentlichen zylindrischem Körper zum Halten des Bündels (50), der sich vom Innenrand des Kragens (46) und senkrecht zu diesem erstreckt, aufweist.

3. Montagevorrichtung nach einem der Ansprüche 1 und 2, dadurch gekennzeichnet, daß die Muffe (42) aus zwei Schalen (66) gebildet ist, wobei jede Schale mit komplementären Einrichtungen (68, 70) zur lösbaren Verbindung mit den anderen Teil versehen ist.

4. Montagevorrichtung nach irgendeinem der Ansprüche 1 bis 3, dadurch gekennzeichnet, daß die beiden Schalen (66) der Muffe identisch sind.

5. Montagevorrichtung nach irgendeinem der Ansprüche 1 bis 4, dadurch gekennzeichnet, daß der Körper der Muffe (42) eine Einschnürung (57) aufweist, wobei eine Zone der Muffe, die sich zwischen dem am zweiten Wandelement (14) liegenden Ende der Muffe und der Einschnürung (57) befindet, eine Aufnahme für ein aushärtbares Dichtungsmaterial (58) definiert.

6. Montagevorrichtung nach irgendeinem der Ansprüche 1 bis 5, dadurch gekennzeichnet, daß die mit dem ersten Wandelement (12) zusammenwirkende Endzone der Dichtungsmanschette (44) mit Umfangslippen (64) versehen ist, die für ein Zusammenwirken mit dem Innenrand der in dem ersten Wandelement (12) ausgebildeten Öffnung (16) eingerichtet ist.

7. Montagevorrichtung nach irgendeinem der Ansprüche 2 bis 6, dadurch gekennzeichnet, daß die Befestigungseinrichtung (46, 48) Schraube-Mutter-Aufbauten aufweist.

8. Montagevorrichtung nach irgendeinem der Ansprüche 2 bis 7, dadurch gekennzeichnet, daß sie eine schwingungsabsorbierende Materialschicht (40) aufweist, die für eine Zwischenlage zwischen dem Kragen (46) der Muffe (42) und dem zweiten Wandelement (14) bestimmt ist.

9. Aufbau aus einem mit einem Stecker (26) versehenen Bündel (10) von elektrischen Leitern zwischen einem ersten (12) und einem zweiten (14) Wandelement eines Kraftfahrzeugs, die im Abstand voneinander liegen, dadurch gekennzeichnet, daß er mittels einer Montagevorrichtung gemäß irgendeinem der Ansprüche 1 bis 8 gewonnen ist.

10. Aufbau nach Anspruch 9, dadurch gekennzeichnet, daß der Rand der Öffnung (16), die in dem ersten Wandelement (12) ausgebildet ist und mit der Dichtungsmanschette (44) in Berührung ist, durch einen gestürzten Rand gebildet ist.
